# EUROPÄISCHE PATENTSCHRIFT

(11) **EP 1 936 923 B1**
(45) Veröffentlichungstag und Bekanntmachung des Hinweises auf die Patenterteilung: **16.05.2012**
(21) Anmeldenummer: 07123191.4
(22) Anmeldetag: 14.12.2007
(51) Int. Cl.: H04L 29/12, H04L 29/06

(54) **Verfahren und Vorrichtung zur Vermittlung von leitungsvermittelnden zu paketvermittelnden Domänen**
Method and device for switching from circuit-switching to packet-switching domains
Procédé et dispositif destinés à la transmission d'un domaine de commutation de circuits à un domaine de commutation par paquets

(30) Priorität: 19.12.2006 DE 102006060571
(43) Veröffentlichungstag der Anmeldung: 25.06.2008
(73) Patentinhaber: Vodafone Holding GmbH, 40213 Düsseldorf (DE)
(72) Erfinder: Lu, Yang, 40489, Düsseldorf (DE); Toepfer, Armin, 41464, Neuss (DE); Wild, Peter, 47807, Krefeld (DE)
(74) Vertreter: Weisse, Renate

(56) Entgegenhaltungen:
- NORTEL: "Termination Flows with NeDS in the HSS" 3GPP TSG SA WG2 ARCHITECTURE - S2#49, [Online] 7. November 2005 (2005-11-07), - 11. November 2005 (2005-11-11) Seiten 1-6, XP002479061 Yokosuka, Japan Gefunden im Internet: URL:http://www.3gpp.org/ftp/tsg_sa/WG2_Arc h/TSGS2_49_Yokosuka/Docs/S2-052673.zip>
- 3GPP SA WG2: "Voice Call Continuity between CS and IMS Study (3GPP TR 23.806 version 7.0.0 Release 7)" 3GPP TR 23.806 V7.0.0, XX, XX, 1. Dezember 2005 (2005-12-01), Seiten 1-153, XP002385067

## Beschreibung

### Technisches Gebiet

Die Erfindung betrifft ein Verfahren für ein Mobilfunknetz zur Weiterleitung eines Anrufs von einer leitungsvermittelnden Domäne zu einer paketvermittelnden Internet Protokoll Multimedia Subsystem Domäne mit folgenden Verfahrensschtitten:
a) Erfassen eines eingehenden Anrufs durch eine Gateway-Mobilfunkvermittlungsstelle anhand einer initialen Adressierungsnachricht, wobei Überprüft wird, welches der Teilnehmerprofil-Heimatserver für den angerufenen Teilnehmer ist,
b) Anforderung von Informationen für die Weiterleitung des angerufenen Teilnehmers durch die Gateway-Mobilfunkvermittlungsstelle bei dem Teilnehmerprofil-Heimatserver,
c) Senden eines Session Initiation Protokoll - Uniform Resource Identifier von dem Teilnehmerprofil-Heimatserver an die Gateway-Mobilfunkvermittlungsstelle als Umleitungsparameter,
d) Feststellen durch die Gateway-Mobilfunkvermittlungsstelle, ob ein Session Initiation Protokoll - Uniform Resource Identifier als Umleitungsparameter vorliegt,
e) Weiterleiten des Anrufs an die paketvermittelnde Internet Protokoll Multimedia Subsystem Domäne.

Ferner betrifft die Erfindung eine Gateway-Vermittlungsstelle für ein Mobilfunknetz zur Weiterleitung eines Anrufs von einer leitungsvermittelnden Domäne zu einer paketvermittelnden Internet Protokoll Multimedia Subsystem Domäne mit folgenden Merkmalen:
a) Mittel zum Erfassen eines eingehenden Anrufs anhand der initialen Adressierungsnachricht eines öffentlichen Netzwerkes oder eines mobilen Netzwerkes,
b) Kontrollmittel zum Überprüfen des Teilnehmerprofil-Heimatserver des angerufenen Teilnehmer,
c) Anforderungsmittel zum Anfordern von Informationen für die Weiterleitung des angerufenen Teilnehmers bei dem Teilnehmerprofil-Heimatserver,
d) Empfangseinrichtung zum Empfangen eines Session Initiation Protokoll - Uniform Resource Identifier von dem Teilnehmerprofil-Heimatserver als Umleitungsparameter,
e) Mittel zum Feststellen, ob ein Session Initiation Protokoll - Uniform Resource Identifier als Umleitungsparameter vorliegt,
f) Einrichtung zum Weiterleiten des Anrufs an die paketvermittelnde Internet Protokoll Multimedia Subsystem Domäne.

Die Erfindung umfasst weiterhin einen Teilnehmerprofil-Heimatserver für ein Mobilfunknetz mit einer Gateway-Mobilfunkvermittlungsstelle zur Weiterleitung eines Anrufs von einer leitungsvermittelnden Domäne zu einer paketvermittelnden Internet Protokoll Multimedia Subsystem Domäne mit folgenden Merkmalen:
a) Mittel zum Überprüfen der Zuordnung eines angerufenen Teilnehmers,
b) Antwortmittel zum Übermitteln von Informationen für die Weiterleitung des angerufenen Teilnehmers bei Anforderung an die Gateway-Mobilfunkvermittlungsstelle,
c) eine Sendeeinrichtung zum Senden eines Session Initiation Protokoll - Uniform Resource Identifier als Umleitungsparameter an die Gateway-Mobilfunkvermittlungsstelle.

### Stand der Technik

Mobilfunknetze der 2,5. und 3. Generation, beispielsweise nach dem GSM/GPRS- oder UMTS-Standard, unterstützen sowohl leitungs- als auch paketorientierte Dienste. Leitungsorientierte Dienste (engl. CS - Circuit Switched) werden dadurch realisiert, dass jedes Übertragungssignal ein eigenes Übertragungsmedium - einen Kanal bzw. eine Leitung - zur Verfügung gestellt bekommt. Ein wesentliches Merkmal von CS-Leitungen ist, dass jeweils nur ein Teilnehmer dieses Medium nutzen kann. Das ist insbesondere bei Echtzeitanwendungen wie Telefonaten oder Live-Videoübertragungen vorteilhaft, da hierbei ein permanenter und konstanter Datenstrom übertragen wird. Leitungsorientierte Telefondienste, wie das alte analoge Telefon, ISDN oder Mobilfunknetze der 2. Generation (z.B. nach dem GSM-Standard), sind seit langem bekannt. Um eine Verbindungsleitung von einer Quelle bis zu einem Ziel aufzubauen, sind Vermittlungsstellen notwendig. Diese Vermittlungsstellen werden in Mobilfunknetzen üblicherweise als MSC (Mobile Switching Center) bezeichnet.

Bei paketorientierten Diensten (engl. PS - Packet Switched) werden zu übermittelnde Daten in Paketen zusammengefasst und mit einer Zieladresse und einem Absender versehen. Die Pakete werden über einen Übertragungskanal an einen Router geschickt. Dabei nutzen im Unterschied zu CS-Diensten mehrere Teilnehmer den gleichen Übertragungskanal. Der Router wertet die Zieladresse eines Pakets aus und schickt das Paket über einen entsprechenden Übertragungskanal an einen weiteren Router. Dieser Vorgang wird so oft wiederholt, bis das Paket bei einem Empfänger angekommen ist. PS-Netze stellen eine sehr effiziente Auslastung der Übertragungsressourcen dar, da hier mehrere Teilnehmer gleichzeitig über einen Übertragungskanal mit Diensten versorgt werden können und viele Dienste keine permanente Leitung eines CS-Netzes benötigen. Der bekannteste PS-Dienst ist das Internet mit seinen unzähligen interaktiven Diensten, welche im allgemeinen keinen permanenten Datenstrom benötigen.

Ein Aufbau eines Mobilfunknetzes der 3. Generation kann physikalisch in einzelne Bereiche oder Subsysteme aufgeteilt werden, welche im UMTS auch Domänen genannt werden. Im Wesentlichen werden drei große Teilbereiche unterschieden: Mobilfunkendgeräte (User Equipment Domain), ein funkbasiertes Zugangsnetz (Access Network Domain) und ein Vermittlungsnetz bzw. Kernnetz (Core Network Domain). Das Kernnetz wiederum enthält eine CS-Domäne zum Aufbau leitungsorientierter Verbindungen und eine PS-Domäne für paketorientierte Verbindungen. Beide Domänen werden über verschiedene Schnittstellen mit dem Zugangsnetz verbunden. Weiterhin enthält das Kernnetz ein IP Multimedia Subsytem (IMS-Domäne), um mobile und ortsgebundene Multimedia-Dienste anbieten zu können.

Die CS-Domäne enthält als Hauptelemente mindestens eine MSC und eine Gateway-MSC (GMSC). Vermittelt ein externes Netzwerk einen Ruf an ein Mobilfunkendgerät über die CS-Domäne, so wird es mit der GMSC verbunden und sendet eine Initial Address Message (IAM) mit einer Mobile Subscriber ISDN Number (MSISDN) des angerufenen Mobilfunkteilnehmers. Daraufhin fordert die GMSC mit einer "Send Routing Information"-Nachricht (SRI Message) des MAP-Signalisierungsprotokolls Teilnehmerinformationen von einem Teilnehmerprofil-Heimatregister (HSS= Home Subscriber Server) an und leitet die IAM anhand der Teilnehmerinformationen an eine entsprechende MSC weiter, in dessen Gebiet das Mobilfunkendgerät stationiert ist. Die Gateway-MSC vermittelt somit Verbindungen zwischen dem Mobilfunknetz und externen Telekommunikationsnetzen. Als Backbone-Netz benötigt die CS-Domäne zur Übertragung von Sprachverkehr ein leitungsvermittelndes Fernsprechnetz, wie beispielsweise ISDN.

Alle teilnehmerrelevanten Informationen werden in dem Teilnehmerprofil-Heimatregister (HSS= Home Subscriber Server) gespeichert. Die CS-, die PS- und die IMS-Domäne können Teltnehmerinformationen mit Hilfe von Signalisierungsprotokollen anfordern. Aus älteren Mobilfunknetzen bekannte VLR (Visitor Location Register) werden den MSCs zugeordnet.

Die PS-Domäne wird gebildet aus SGSN (Serving GPRS Support Node) und GGSN (Gateway GPRS Support Node) und erfordert ein Backbone-Netz mit einer paketvermittelnden Technologie, typischerweise mit dem Internet Protokoll (IP). Die SGSN bildet eine Schnittstelle zwischen dem funkbasiertem Zugangsnetz und einem Festnetz für paketorientierte Dienste, während über die GGSN Verbindungen zu anderen IP-Netzen aufgebaut werden.

Über die PS-Domäne kann auf die IP Multimedia Subsystem Domäne (IMS-Domäne) zugegriffen werden. Die IMS-Domäne ist eine nach 3GPP standardisierte Netzwerkarchitektur für Telekommunikationsnetzwerke. Als paketorientiertes System benutzt das IMS das IP und Voice-over-IP (VoIP). Ein Ziel des IMS ist es, alle Internetdienste auch für Mobilfunkteilnehmer zugänglich zu machen. Leitungsorientierte Telefondienste werden über Gateways, wie ein Medien Gateway (MGW) für Daten oder ein Signaliserungsgateway (SGW) für leitungsvermittelnde Signale, unterstützt.

Als eine wesentliche Steuerungs- und Signalisierungskomponente enthält die IMS-Domäne die Call Server Control Funktion (CSCF). Die CSCF ist u.a. für die Verarbeitung der Signalisierungsmeldungen der Multimedia-Session und das Umschalten zwischen mehreren Diensten eines Mobilfunkteilnehmers verantwortlich. Gemäß der 3GPP-Rel-5-Spezifizierung wird in der CSCF das Session Initiation Protokoll (SIP) eingesetzt. Weiterhin enthält die IMS-Domäne eine Medien Gateway Kontrollfunktion (MGCF= Media Gateway Control Function). Die MGCF dient als Übergabepunkt zu allen anderen Mobilfunknetzen und Festnetzen und benutzt dazu das MGW und das SGW.

Inzwischen besitzen immer mehr Mobilfunkteilnehmer mehrere Mobilfunkendgeräte mit unterschiedlichen Leistungsfähigkeiten, um verschiedene Dienste über ein Mobilfunknetz zu nutzen. Daher braucht ein Mobilfunkteilnehmer die Möglichkeit, Anfragen oder Übermittlungen von verschiedenen Diensten an das entsprechende Mobilfunkendgerät weiterzuleiten. Dieser Umstand wird in dem Dokument 3GPP TS 22.259 "Service Requirements for Personal Network Management (PNM)" näher beschrieben.

Gegenwärtig können eingehende Anrufe von einer paketorientierten IMS-Domäne durch ein Kernnetz sowohl zu Endgeräten in einer leitungsorientierten CS-Domäne als auch zu Endgeräten in einer IMS-Domäne weitergeleitet werden. Dies wird in dem Standard 3GPP TS 24.229 reglementiert. Auch eine Weiterleitung eines Anrufs von einer CS-Domäne zu einem Endgerät in einer CS-Domäne wird einem Kernnetz durch Mechanismen ermöglicht, welche in den Dokumenten 3GPP TS 29.002 und TS 24.008 spezifiziert werden.

In 3GPP TS wird jedoch nicht offenbart, wie ein Anruf, der von einer CS-Domäne kommt, an ein Endgerät in einer IMS-Domäne überführt werden kann. Daher können solche Anrufe auch nicht mit einem in einer IMS-Domäne angemeldeten Endgerät entgegengenommen werden. Ein Benutzer eines solchen Endgeräts ist nicht von einer CS-Domäne aus erreichbar. Dadurch ist auch eine Einrichtung einer Rufweiterleitung durch einen Mobilfunkteilnehmer nicht möglich, welche Anrufe aus einer CS-Domäne zu einem Endgerät in einer IMS-Domäne weiterleitet.

Das Dokument NORTEL: "Termination Flows with NeDS in the HSS"; 3GPP TSG SA WG2 Architecture - S2#49; 11. November 2005; XP002479061 offenbart eine Weiterleitung eines eingehenden Anrufs von einer CS-Domäne in eine IMS-Domäne. Dabei fordert eine GMSC mit einer SRI-Nachricht eines MAP Protokolls Weiterleitungsinformationen von einem HSS an. Der HSS ermittelt, ob der Anruf in die IMS-Domäne weitergeleitet werden soll. Falls ja, sendet der HSS eine dem Benutzer zugeordnete IMRN (IP Multimedia Routing Number) in einer SRI_Ack Bestätigung des MAP Protokolls an die GMSC. Die GMSC leitet die IMRN in einer IAM an eine MGFC weiter. Bei der MGFC wird eine INVITE-Nachricht mit einem Tel-URI an eine ICSF initiiert. Der Tel-URI entspricht dabei der IMRN.

Das Dokument 3GPP SA WG2: "Voice Call Continuity between CS and IMS Study"; 3GPP TR 23.806 Version 7.0.0; 1. Dezember 2005; XP002385067 beschreibt verschiedene Weiterleitungen eines Anrufs zwischen einer IMS-Domäne und einer CS-Domäne. Weiterhin wird in diesem Dokument ein HSS mit erweiterten Funktionalitäten für eine Weiterleitung beschrieben. Dafür ist in dem HSS eine NeDS- (Network Domain Selection) Einheit vorgesehen.

### Offenbarung der Erfindung

Aufgabe der Erfindung ist es daher, ein Verfahren und Vorrichtungen zu schaffen, welche Anrufe von einer CS-Domäne an eine IMS-Domäne weiterleiten.

Erfindungsgemäß wird die Aufgabe durch ein Verfahren für ein Mobilfunknetz zur Weiterleitung eines Anrufs von einer leitungsvermittelnden Domäne zu einer paketvermittelnden Internet Protokoll Multimedia Subsystem Domäne der eingangs genannten Art dadurch gelöst, dass
f) das Senden des Session Initiation Protokoll - Uniform Resource Identifier von dem Teilnehmerprofil-Heimatserver an die Gateway-Mobilfunkvermittlungsstelle mit einem zum Sendern des Session Initiation Protokoll - Uniform Resource Identifier erweiterten MAP Signalisierungsprotokoll erfolgt.

Weiterhin wird die Aufgabe durch eine Gateway-Vermittlungsstelle für ein Mobilfunknetz zur Weiterleitung eines Anrufs von einer leitungsvermittelnden Domäne zu einer paketvermittelnden Internet Protokoll Multimedia Subsystem Domäne der eingangs genannten Art dadurch gelöst, dass
g) die Empfangseinrichtung zum Empfangen des Session Initiation Protokoll - Uniform Resource Identifier mit einem zum Senden des Session Initiation Protokoll - Uniform Resource Identifier erweiterten MAP Signalisierungsprotokoll ausgebildet ist.

Ferner wird die Aufgabe mit einem Teilnehmerprofil-Heimatserver für ein Mobilfunknetz der eingangs genannten Art dadurch gelöst, dass
d) die Sendeeinrichtung zum Senden des Session Initiation Protokoll - Uniform Resource Identifier mit einem zum Senden des Session Initiation Protokoll - Uniform Resource Identifier erweiterten MAP Signalisierungsprotokoll ausgebildet ist.

Durch das erfindungsgemäße Verfahren wird eine Weiterleitung eines in der CS-Domäne eingehenden Rufs in die IMS-Domäne ermöglicht. Eine solche Weiterleitung wird bisher im 3GPP-Standard nicht spezifiziert. Ein Mobilfunkteilnehmer mit einem in der IMS-Domäne angemeldeten Mobilfunkendgerät ist mit dem erfindungsgemäßen Verfahren auch über die CS-Domäne erreichbar. Insbesondere wird ein Mobilfunkteilnehmer mit mehreren Mobilfunkendgeräten in die Lage versetzt, leitungsorientierte Anrufe an ein entsprechendes Mobilfunkendgerät weiterzuleiten, egal ob der Ruf in der CS- oder der PS-Domäne eingeht und in welcher Domäne das entsprechende Mobilfunkendgerät angemeldet ist. Damit werden Anforderungen gemäß 3GPP TS 22.259 "Service requirements for Personal Network Management (PNM)" erfüllt.

Weiterhin sind durch eine Verwendung bereits vorhandener Verfahren und Vorrichtungen nur minimale Änderungen in einem vorhandenen Kernnetz zur Realisierung des Verfahrens zur Weiterleitung von Anrufen notwendig. Es werden keine neuen Schnittstellen oder Protokolle benötigt. Dadurch lässt sich das erfindungsgemäße Verfahren einfach und schnell einrichten. Eine Implementierung des Weiterleitungsverfahren ist somit preiswert und ohne Auswirkungen auf das übrige Kernnetz möglich.

Durch die in der erfindungsgemäßen Gateway-Vermittlungsstelle vorgesehen Mittel und Einrichtungen wird insbesondere festgestellt, ob ein Session Initiation Protokoll - Uniform Resource Identifier (SIP-URI) als Umleitungsparameter vorliegt und gegebenenfalls eine entsprechende Weiterleitung eines Anrufs in die IMS-Domäne vorgenommen. Somit ermöglicht die erfindungsgemäße Gateway-Vermittlungsstelle eine Rufweiterleitung von einer CS-Domäne in eine IMS-Domäne. Da eine bestehende Architektur eines Kernnetzes nicht verändert wird und vorhandene Einrichtungen und Protokolle für die

Weiterleitung genutzt werden, lässt sich diese kostengünstig und unkompliziert einrichten.

Mit den in dem erfindungsgemäßen Teilnehmerprofil-Heimatserver enthaltenen Mitteln zum Überprüfen der Zuordnung eines Mobilfunkteilnehmers und zum Antworten auf eine Anforderung einer GMSC nach Teilnehmerinformationen, sowie der Sendeeinrichtung zum Übermitteln eines SIP-URI als Umleitungsparameter, wird eine Rufweiterleitung von einer CS-Domäne in eine IMS-Domäne einfach, schnell und ohne teure Maßnahmen ermöglicht.

Eine vorteilhafte Ausgestaltung der Erfindung besteht darin, dass eine initiale Adressierungsnachricht (IAM) in eine Session Initiation Protokoll-Nachricht (SIP-Message) durch eine Medien Gateway Kontrollfunktion umgewandelt wird. Beispielsweise kann eine Umwandlung einer IAM in eine "INVITE"-SIP-Message erfolgen. Durch eine Umwandlung wird eine Weiterleitung eines Anrufs aus einer CS-Domäne in eine IMS-Domäne vereinfacht. Mit einer SIP-Message können beliebige Sessions, wie beispielsweise VoIP, Multimediaströme, Konferenzen oder Computerspiele in der IMS-Domäne angefordert und verwaltet werden. Somit kann das erfindungsgemäße Verfahren alle Funktionalitäten der IMS-Domäne einem Benutzer zur Verfügung stellen.

Gemäß einer zweckmäßigen Ausbildung des erfindungsgemäßen Verfahrens werden bei einer aufgeteilten Architektur einer leitungsvermittelnden Domäne ein Gateway-Mobilfunkvermittlungsstelle-Server (GMSC-S) und/oder ein Medien-Gateway (MGW) verwendet. In UMTS Kernnetzen wird eine neue Architektur mit einer Trennung einer Steuerungsschicht von einer Transportschicht eingeführt. Eine leitungsvermittelnde Domäne enthält dann statt einer MSC einen MSC-Server in der Steuerungsschicht und ein Medium-Gateway in der Transportschicht. Durch die Nutzung eines GMSC-S und eines MGW in dem erfindungsgemäßen Verfahren ist dieses Verfahren auch für Kernnetze mit einer aufgeteilten Architektur der CS-Domäne anwendbar. Mobilfunknetzbetreiber mit solchen Kernnetzen wird ebenfalls ermöglicht, Benutzern alle Vorteile einer Rufweiterleitung von einer CS-Domäne in eine IMS-Domäne anzubieten.

Eine bevorzugte Ausgestaltung des erfindungsgemäßen Verfahrens wird dadurch erzielt, dass der Teilnehmerprofil-Heimatserver (HSS) Teilnehmereinstellungen auf Grundlage eines Basic Services speichert. Als Basic Service werden besonders Dienste zur Telekommunikation zwischen verschiedenen Mobilfunkteilnehmern bezeichnet. Beispielsweise ermöglicht ein Basic Service ein Telefonat oder eine Konferenzschaltung. Durch eine Speicherung von Vorgaben oder Einstellungen eines Mobilfunkteilnehmers in dem Teilnehmerprofil-Heimatserver sind entsprechende Basic Services direkt bei einer Anforderung eines GMSC nach Routing-Informationen ausführbar. Beispielsweise kann ein Mobilfunkteilnehmer durch das erfindungsgemäße Verfahren festlegen, dass ein in der CS-Domäne eingehender Sprachruf innerhalb der CS-Domäne weitergeleitet wird, während ein in der CS-Domäne eingehendes Videotelefonat an ein in der IMS-Domäne registriertes Mobilfunkendgerät geleitet wird. Durch diese Ausgestaltung des Verfahrens wird ein persönliches Netzwerkmanagement in dem Umfang, wie es in dem Dokument 3GPP TS 22.259 beschrieben wird, ermöglicht.

Eine vorteilhafte Ausbildung des erfindungsgemäßen Verfahrens ergibt sich ferner dadurch, dass das Mobilfunknetz einen Session Initiation Protokoll - Uniform Resource Identifier (SIP-URI) innerhalb der leitungsvermittelnden Domäne transferiert zur Ermöglichung eines Transfers zu einer paketvermittelnden Internet Protokoll Multimedia Subsystem Domäne. Ein SIP-URI wird als Umleitungsparameter von dem Teilnehmerprofil-Heimatserver (HSS) an die Gateway-Mobilfunkvermittlungsstelle in der leitungsvermittelnden Domäne übermittelt. Dazu können beispielsweise vorhandene MAP Signalisierungsprotokolle erweitert werden. Durch eine Nutzung vorhandener Ressourcen wird ein Einrichtungsaufwand für das erfindungsgemäße Verfahren minimiert.

Gemäß einer weiteren zweckdienlichen Ausgestaltung des erfindungsgemäßen Verfahrens leitet die Gateway-Mobilfunkvermittlungsstelle einen Anruf an das Medien Gateway Kontrollfunktionsystem bzw. die Internet Protokoll Multimedia Subsystem Domäne weiter. Durch eine Verwendung der bereits vorhandenen Gateway-Mobilfunkvermittlungsstelle zur Weiterleitung des Anrufs ist das erfindungsgemäße Verfahren einfach, schnell und kostengünstig realisierbar. Es sind keine teuren und umständlichen Umgestaltungen des Kernnetzes notwendig und Auswirkungen auf bestehende Mittel und Mechanismen sind minimal.

Weitere Ausgestaltungen und Vorteile ergeben sich aus dem Gegenstand der Unteransprüche, sowie den Zeichnungen mit den dazugehörigen Beschreibungen.

### Kurze Beschreibung der Zeichnung

- Fig. 1: zeigt in einer schematischen Prinzipskizze ein Ausführungsbeispiel einer Rufweiterleitung in einem Mobilfunknetz nach dem UMTS-Standard mit allen für die Weiterleitung wesentlichen Komponenten.
- Fig. 2: zeigt in einem schematischen Diagramm einen Nachrichtenaustausch bei einer Rufweiterleitung entsprechend Fig. 1.

### Bevorzugtes Ausführungsbeispiel

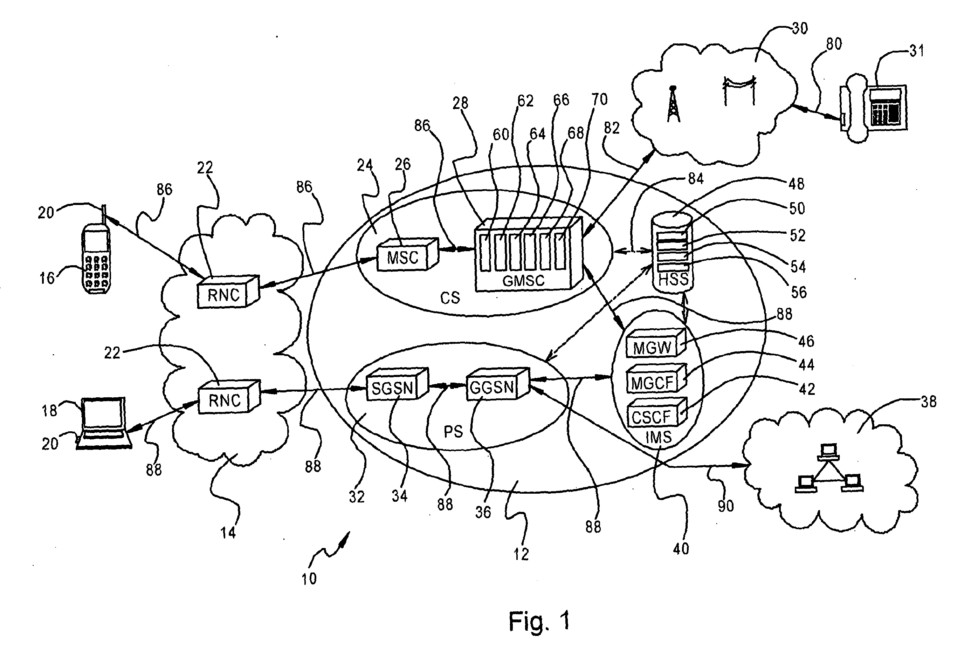

In Fig. 1 wird mit 10 ein Mobilfunknetz, beispielsweise nach dem UMTS-Standard, mit einem Kernnetz 12 und einem Zugangsnetz 14 bezeichnet. Über das Mobilfunknetz 10 kann ein Mobilfunkteilnehmer mit Mobilfunkendgeräten 16, 18 mobil telekommunizieren. Dazu enthalten die Mobilfunkendgeräte 16 und 18 ein Sende- und Empfangsmodul 20, mit dem über eine Funkschnittstelle eine Verbindung zum Zugangsnetz 14 aufgebaut wird. Aufbau und Funktionsweise des Zugangsnetzes 14 sind dem Fachmann bekannt und werden hier nicht näher dargestellt. Das Zugangsnetz 14 enthält mehrere RNCs (Radio Network Controller) 22 zum Steuern und Verwalten von Funkverbindungen. Über verschiedene Schnittstellen realisieren die RNCs 22 Verbindungen zum Kernnetz 12.

Das Kernnetz 12 enthält eine leitungsvermittelnde Domäne - CS-Domäne 24 mit mindestens einer Mobilfunkvermittlungsstelle (MSC) 26 und einer Gateway-Mobilfunkvermittlungsstelle (GMSC) 28 für einen Aufbau von leitungsorientierten Verbindungen. Dabei stellt die GMSC 28 Verbindungen zu anderen Mobilfunk- oder Festnetzen 30 und einem damit verbundenem Endgerät 31 her und vermittelt diese an die MSC 26. Die MSC 26 vermittelt die Verbindungen an das jeweils zuständige RNC 22 im Zugangsnetz 14.

Weiterhin ist in dem Kernnetz 12 eine paketvermittelnde Domäne - PS-Domäne 32 zum Vermitteln von paketorientierten Verbindungen vorgesehen. Dazu verfügt die PS-Domäne 32 über einen Serving GPRS Support Node (SGSN) 34 zum Vermitteln einer paketorientierten Verbindung zwischen dem Kernnetz 12 und einem Mobilfunkendgerät 16, 18 über das Zugangsnetz 14. Ferner enthält die PS-Domäne 32 einen Gateway GPRS Support Node (GGSN) 36 zur Paket-Vermittlung an stationäre externe IP-Netze 38.

Außerdem enthält das Kernnetz 12 eine paketorientierte Internet Protokoll Multimedia Subsystem Domäne (IMS-Domäne) 40, um Internet- und Multimediadienste für Mobilfunkteilnehmer zugänglich zu machen. Als eine wesentliche Steuerungs- und Signalisierungskomponente ist in der IMS-Domäne 40 eine Call Server Control Funktion (CSCF) 42 vorgesehen. Die CSCF 42 ist beispielsweise für eine Verarbeitung von Signalisierungsmeldungen einer Multimedia-Session und für ein Umschalten zwischen mehreren Diensten eines Mobilfunkteilnehmers verantwortlich. Weiterhin enthält die IMS-Domäne 40 eine Media Gateway Control Funktion (MGCF) als Übergabepunkt für leitungsorientierte Verbindungen zu anderen Mobilfunk- und Festnetzen 30 und benutzt dazu ein Media Gateway (MGW) 46. Paketorientierte Verbindungen werden über die PS-Domäne 32 direkt mit der IMS-Domäne 40 aufgebaut.

Alle teilnehmerrelevanten Informationen werden für das Kernnetz 12 in einem Teilnehmerprofil-Heimatregister (HSS= Home Subscriber Server) 48 gespeichert. Auf den HSS 48 greifen sowohl die PS-Domäne 32 und die IMS-Domäne 40, als auch die CS-Domäne 24 zu, um teilnehmerspezifische Verbindungen oder Dienste zu vermitteln. Zur Weiterleitung eines Anrufs aus der CS-Domäne 24 in die IMS-Domäne 40 sind in dem HSS 48 Überprüfungsmittel 50 zum Zuordnen eines angerufenen Mobilfunkteilnehmers und Antwortmittel 52 zum Übermitteln von Teilnehmerinformationen an die GMSC 28 für eine Weiterleitung vorgesehen. Dazu sind in einer Speichervorrichtung 54 insbesondere auch teilnehmerspezifische Voreinstellungen zum Verbindungsaufbau (Basic Services) gespeichert. Ferner enthält die HSS 48 eine Sendeeinrichtung 56 zum Senden eines Session Initiation Protokoll - Uniform Resource Identifier (SIP-URI) als Umleitunugsparameter.

In der GMSC 28 sind zur Weiterleitung eines Anrufs aus der CS-Domäne 24 in die IMS-Domäne 40 Erfassungsmittel 60 zum Erfassen eines eingehenden Anrufs mit einer initialen Adressierungsnachricht (IAM= Initial Address Message) und Kontrollmittel 62 zum Überprüfen des zuständigen HSS 48 vorgesehen. Mit Anforderungsmittel 64 werden Informationen für eine Weiterleitung des angerufenen Teilnehmers beim HSS 48 angefordert. Weiterhin enthält die GMSC 28 eine Empfangseinrichtung 66 für den Empfang eines SIP-URI von dem HSS 48 und Feststellungsmittel 68, um eine SIP-URI als Umleitungsparameter zu erkennen. Mit einer Weiterleitungseinrichtung 70 wird ein entsprechender Anruf an die paketvermittelnde ISM-Domäne 40 weitergeleitet.

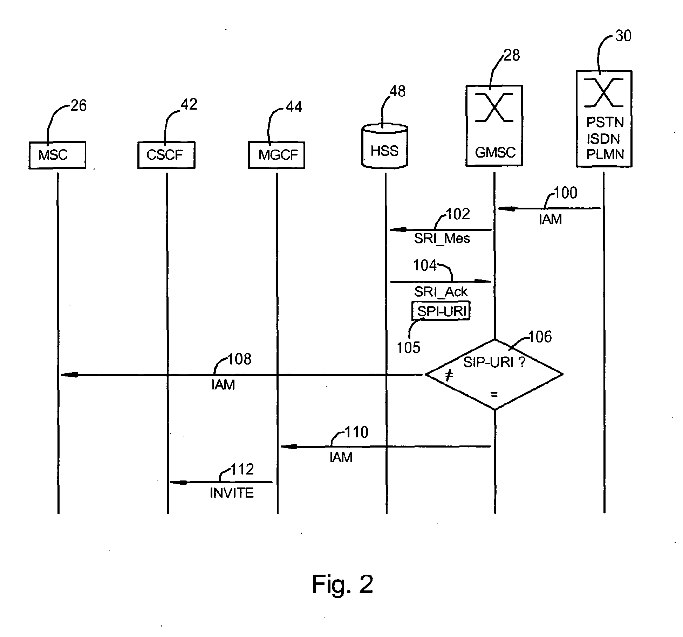

Anhand von Fig. 2 wird mit Bezugnahme auf Fig. 1 das Verfahren näher erläutert. Gleiche Bestandteile werden daher auch mit gleichen Bezugszeichen bezeichnet. Fig. 2 zeigt einen schematisch Nachrichtenablauf bei dem Ausführungsbeispiel des Verfahrens zur Weiterleitung eines Anrufs von einer CS-Domäne in eine IMS-Domäne nach Fig. 1. Die Zeitachse verläuft in Fig. 2 nach unten. Bezugszeichen von Verbindungen (Pfeile) beziehen sich immer auf Fig. 1.

Zum Aufbau einer leitungsorientierten Verbindung zu einem Mobilfunkendgerät 16, 18 eines Mobilfunkteilnehmers über ein Mobilfunk- oder Festnetz 30 (PLMN= Public Land Mobile Network, PSTN= Public Switched Telephone Netwerk, ISDN= Integrated Services Digital Network) wird von einem Benutzer oder einem Dienst üblicherweise eine Teilnehmernummer (MSISDN= Mobile Subscriber ISDN Number) mit einem Endgerät 31 - siehe auch Fig. 1 - an das Mobilfunk- oder Festnetz 30 übermittelt, Pfeil 80. Das Mobilfunk- oder Festnetz 30 übermittelt über eine leitungsorientierte Verbindung 82 eine Initial Address Message (= IAM) 100 - Fig. 2 - an die entsprechende GMSC 28. Die IAM 100 wird in der GMSC 28 von den Mitteln 60 zum Erfassen eines Anrufs detektiert.

Mit den Kontrollmitteln 62 wird das für den angerufenen Teilnehmer gültige HSS 48 ermittelt und mit den Anforderungsmitteln 64 eine "Send Routing Information"-Nachricht (SRI_Mes) 102 des MAP-Signalisierungsprotokolls an das HSS 48 gesendet, Pfeil 84. In der SRI_Mes sind der gewünschte Basic Service (Verbindungsart, z.B. Sprachtelefonie oder Videotelefonie) und die MSISDN enthalten.

Das HSS 48 ermittelt anhand der Überprüfungsmittel 50 Teilnehmerdaten des angerufenen Mobilfunkteilnehmers, insbesondere Roamingdaten, in welchen Domänen der Mobilfunkteilnehmer zur Zeit registriert ist, und welche Weiterleitungspräferenzen der Mobilfunkteilnehmer für bestimmte Verbindungsarten eingestellt hat. Beispielsweise kann ein Mobilfunkteilnehmer eine Entgegennahme eines Sprachrufs immer mit einem in der CS-Domäne registriertem Mobilfunkendgerät 18 wünschen, während Videotelefonie-Verbindungen mit einem in der IMS-Domäne angemeldetem Mobilfunkendgerät 16 geführt werden sollen. Präferenzen eines Mobilfunkteilnehmers zu den Basic Services sind in der Speichervorrichtung 54 gespeichert.

Wenn der angerufenen Mobilfunkteilnehmer nur in der CS-Domäne 24 registriert ist oder seine Präferenz für den gewünschten Verbindungsaufbau die CS-Domäne 24 ist, sendet das HSS 48 die übliche SRI-Bestätigung (SRI_Ack) 104 an das GMSC 28 zurück. Dieses Verfahren wird in dem Dokument 3GPP TS 23.018 spezifiziert. Zum Übermitteln der SRI-Bestätigung 104 sind Antwortmittel 52 in dem HSS 48 vorgesehen. Ist der angerufene Mobilfunkteilnehmer in der IMS-Domäne 40 registriert oder hat der Mobilfunkteilnehmer als Präferenz für die gewünschte Verbindung die IMS-Domäne 40 angegeben, so sendet die HSS 48 mit dem Antwortmittel 52 und einer Sendeeinrichtung 56 eine SRI-Bestätigung 104 mit einem SIP-URI 105 an das GMSC 28.

Das GMSC 28 empfängt die SRI-Bestätigung 104 mit der SIP-URI 105 über die CS-Domäne mittels der Empfangseinrichtung 66. Anschließend überprüft die GMSC 28 die empfangene SRI-Bestätigung 104 mit den Feststellungsmitteln 68 nach einer SIP-URI 105 als Umleitungsparameter (s. 106). Liegt keine SIP-URI 105 vor, leitet die GMSC 28 die IAM 108 an das entsprechende MSC 26 weiter. Es folgt ein Aufbau einer Verbindung, Pfeile 86, zu dem in der CS-Domäne 24 angemeldeten ersten Mobilfunkendgerät 16, mit bekannten Verfahren und Vorrichtungen.

Stellt das Feststellungsmittel 68 eine SIP-URI 105 fest, wird die IAM 110 an das MGCF 44 der IMS-Domäne 40 weitergeleitet. Das MGCF 44 transformiert die IAM in eine "INVITE"-SIP-Message 112 und leitet diese an das CSCF 42 weiter. Das CSCF baut daraufhin eine Verbindung (Pfeile 88) von dem GMSC 28 über das MGW 46, die GGSN36, die SGSN 34 und dem Zugangsnetz 14 zu dem, in der IMS-Domäne 40 registriertem, zweitem Mobilfunkendgerät 16 auf. Alternativ kann auch eine Verbindung 90 zu einem nicht dargestellten Endgerät in einem externen IP-Netz 38, wie beispielsweise dem Internet eingerichtet werden.

Bei einer geteilten Architektur der CS-Domäne 24 mit einer Transportschicht und einer Steuerungsschicht werden statt der MSC 26 und der GMSC 28 entsprechende MSC- und GMSC-Server in der Steuerungsschicht und dazugehörige Medien-Gateways in der Transportschicht verwendet. In einer weiteren Ausführung des Verfahrens zur Weiterleitung von Anrufen aus einer CS-Domäne 24 in eine IMS-Domäne 40 wird statt eines GMSC 28 ein GMSC-S bei dem Verfahren verwendet. Insbesondere sind beim GMSC-Server analog zur GMSC 28 entsprechende Mittel zur Durchführung des Verfahrens vorgesehen.

Durch das Verfahren und die entsprechenden Vorrichtungen wird eine Weiterleitung eines in der CS-Domäne 24 eingehenden Rufs in die IMS-Domäne 40 ermöglicht. Insbesondere wird ein Mobilfunkteilnehmer mit mehreren Mobilfunkendgeräten 16, 18 in die Lage versetzt, leitungsorientierte Anrufe je nach gewünschtem Basic Service an ein entsprechendes Mobilfunkendgerät 16, 18 weiterzuleiten, egal ob der Ruf in der CS- oder der PS-Domäne eingeht und in welcher Domäne 24, 32, 40 das Mobilfunkendgerät 16, 18 angemeldet ist.

Weiterhin sind durch die Verwendung bereits vorhandener Verfahren und Vorrichtungen nur minimale Änderungen in einem vorhandenen Kernnetz 12 zur Realisierung des Verfahrens zur Weiterleitung von Anrufen notwendig. Dadurch lässt es sich schnell, kostengünstig und mit sehr geringen Auswirkungen auf das übrige Kernnetz 12 installieren.

### Bezugszeichenliste

- 10: Mobilfunknetz
- 12: Kernnetz
- 14: Zugangsnetz
- 16: erstes Mobilfunkendgerät
- 18: zweites Mobilfunkendgerät
- 20: Sende- und Empfangseinheit
- 22: RNC
- 24: CS-Domäne
- 26: MSC
- 28: GMSC
- 30: Mobilfunk- oder Festnetz
- 31: Endgerät
- 32: PS-Domäne
- 34: SGSN
- 36: GGSN
- 38: externes IP-Netz
- 40: IMS-Domäne
- 42: CSCF
- 44: MGCF
- 46: MGW
- 48: HSS
- 50: Überprüfungsmittel (HSS)

- 52: Antwortmittel (HSS)
- 54: Speichervorrichtung (HSS)
- 56: Sendeeinrichtung (HSS)
- 60: Erfassungsmittel (GMSC)
- 62: Kontrollmittel (GMSC)
- 64: Anforderungsmittel (GMSC)
- 66: Empfangseinrichtung (GMSC)
- 68: Feststellungsmittel (GMSC)
- 70: Weiterleitungseinrichtung (GMSC)
- 80: Verbindung
- 82: Verbindung
- 84: Pfeil
- 86: Verbindung (zu 16)
- 88: Verbindung (zu 18)
- 100: IAM an GMSC
- 102: SRI-Nachricht
- 104: SRI-Bestätigung
- 105: SIP-URI
- 106: Überprüfung
- 108: IAM an MSC
- 110: IAM an MGFC
- 112: "INVITE"-SIP-Nachricht an CSCF

## Patentansprüche

1. Verfahren für ein Mobilfunknetz (10) zur Weiterleitung eines Anrufs von einer leitungsvermittelnden Domäne (24) zu einer paketvermittelnden Internet Protokoll Multimedia Subsystem Domäne (40) mit folgenden Verfahrensschritten:
a) Erfassen eines eingehenden Anrufs durch eine Gateway-Mobilfunkvermittlungsstelle (28) anhand einer initialen Adressierungsnachricht (100), wobei überprüft wird, welches der Teilnehmerprofil-Heimatserver (48) für den angerufenen Teilnehmer ist,
b) Anforderung von Informationen für die Weiterleitung des angerufenen Teilnehmers durch die Gateway-Mobilfunkvermittlungsstelle (28) bei dem Teilnehmerprofil-Heimatserver,
c) Senden eines Session Initiation Protokoll - Uniform Resource Identifier (105) von dem Teilnehmerprofil-Heimatserver (48) an die Gateway-Mobilfunkvermittlungsstelle (28) als Umleitungsparameter,
d) Feststellen durch die Gateway-Mobilfunkvermittlungsstelle (28), ob ein Session Initiation Protokoll - Uniform Resource Identifier (105) als Umleitungsparameter vorliegt,
e) Weiterleiten des Anrufs an die paketvermittelnde Internet Protokoll Multimedia Subsystem Domäne (40),
**dadurch gekennzeichnet, dass**
f) das Senden des Session Initiation Protokoll - Uniform Resource Identifier (105) von dem Teilnehmerprofil-Heimatserver (48) an die Gateway-Mobilfunkvermittlungsstelle (28) mit einem zum Senden des Session Initiation Protokoll - Uniform Resource Identifier (105) erweiterten MAP Signalisierungsprotokoll erfolgt.

2. Verfahren nach Anspruch 1, **dadurch gekennzeichnet, dass** eine initiale Adressierungsnachricht (110) in eine Session Initiation Protokoll-Nachricht (112) durch eine Medien Gateway Kontrollfunktion (44) umgewandelt wird.

3. Verfahren nach einem der Ansprüche 1 oder 2, **dadurch gekennzeichnet, dass** bei einer aufgeteilten Architektur einer leitungsvermittelnden Domäne (24) mit einer Trennung einer Steuerungsschicht von einer Transportschicht statt der Gateway-Mobilfunkvermittlungsstelle ein Gateway-Mobilfunkvermittlungsstelle-Server in der Steuerungsschicht und ein Medien-Gateway in der Transportschicht verwendet werden.

4. Verfahren nach einem der Ansprüche 1 bis 3, **dadurch gekennzeichnet, dass** der Teilnehmerprofil-Heimatserver (48) Teilnehmereinstellungen auf Grundlage eines Basic Services speichert.

5. Verfahren nach einem der Ansprüche 1 bis 4, **dadurch gekennzeichnet, dass** das Mobilfunknetz (10) einen Session Initiation Protokoll - Uniform Resource Identifier (105) innerhalb der leitungsvermittelnden Domäne (24) transferiert zur Ermöglichung eines Transfers zu einer paketvermittelnden Internet Protokoll Multimedia Subsystem Domäne (40).

6. Verfahren nach einem der Ansprüche 1 bis 5, **dadurch gekennzeichnet, dass** die Gateway-Mobilfunkvermittlungsstelle (28) den Anruf an das Medien Gateway Kontrollfunktionsystem (44) der Internet Protokoll Multimedia Subsystem Domäne weiterleitet (40).

7. Gateway-Vermittlungsstelle (28) für ein Mobilfunknetz (10) zur Weiterleitung eines Anrufs von einer leitungsvermittelnden Domäne (24) zu einer paketvermittelnden Internet Protokoll Multimedia Subsystem Domäne (40) mit folgenden Merkmalen:
a) Mittel (60) zum Erfassen eines eingehenden Anrufs anhand der initialen Adressierungsnachricht (100) eines öffentlichen Netzwerkes (30) oder eines mobilen Netzwerkes (30),
b) Kontrollmittel (62) zum Überprüfen des Teilnehmerprofil-Heimatserver (48) des angerufenen Teilnehmer,
c) Anforderungsmittel (64) zum Anfordern von Informationen für die Weiterleitung des angerufenen Teilnehmers bei dem Teilnehmerprofil-Heimatserver (48),
d) Empfangseinrichtung (66) zum Empfangen eines Session Initiation Protokoll - Uniform Resource Identifier (105) von dem Teilnehmerprofil-Heimatserver (48) als Umleitungsparameter,
e) Mittel (68) zum Feststellen, ob ein Session Initiation Protokoll - Uniform Resource Identifier (105) als Umleitungsparameter vorliegt,
f) Einrichtung (70) zum Weiterleiten des Anrufs an die paketvermittelnde Internet Protokoll Multimedia Subsystem Domäne (40),
**dadurch gekennzeichnet, dass**
g) die Empfangseinrichtung (66) zum Empfangen des Session Initiation Protokoll - Uniform Resource Identifier (105) mit einem zum Senden des Session Initiation Protokoll - Uniform Resource Identifier (105) erweiterten MAP Signalisierungsprotokoll ausgebildet ist.

8. Teilnehmerprofil-Heimatserver (48) für ein Mobilfunknetz (10) mit einer Gateway-Mobilfunkvermittlungsstelle (28) zur Weiterleitung eines Anrufs von einer leitungsvermittelnden Domäne (24) zu einer paketvermittelnden Internet Protokoll Multimedia Subsystem Domäne (40) mit folgenden Merkmalen:
a) Mittel (50) zum Überprüfen der Zuordnung eines angerufenen Teilnehmers,
b) Antwortmittel (52) zum Übermitteln von Informationen für die Weiterleitung des angerufenen Teilnehmers bei Anforderung an die Gateway-Mobilfunkvermittlungsstelle (28),
c) eine Sendeeinrichtung (56) zum Senden eines Session Initiation Protokoll - Uniform Resource Identifier (105) als Umleitungsparameter an die Gateway-Mobilfunkvermittlungsstelle (28),
**dadurch gekennzeichnet, dass**
d) die Sendeeinrichtung (56) zum Senden des Session Initiation Protokoll - Uniform Resource Identifier (105) mit einem zum Senden des Session Initiation Protokoll - Uniform Resource Identifier (105) erweiterten MAP Signalisierungsprotokoll ausgebildet ist.

## Claims

1. A method for a mobile radio network (10) for forwarding a call from a circuit-switched domain (24) to a packet-switched Internet Protocol Multimedia Subsystem domain (40) comprising the following steps:
a) detecting an incoming call by a gateway mobile switching center (28) on the basis of an initial addressing message (100), wherein it is checked, which is the subscriber profile home server (48) for the called subscriber,
b) requesting information for the forwarding of the called subscriber by the gateway mobile switching center (28) from the subscriber profile home server,
c) transmitting a Session Initiation Protocol - Uniform Resource Identifier (105) from the subscriber profile home server (48) to the gateway mobile switching center (28) as a redirection parameter,
d) determining by the gateway mobile switching center (28) whether a Session Initiation Protocol - Uniform Resource Identifier (105) is present as a redirection parameter,
e) forwarding the call to the packet-switched Internet Protocol Multimedia Subsystem domain (40),
**characterized in that**
f) the transmitting of the Session Initiation Protocol - Uniform Resource Identifier (105) from the subscriber profile home server (48) to the gateway mobile switching center (28) is carried out with an extended MAP signaling protocol which is extended for transmitting the Session Initiation Protocol - Uniform Resource Identifier (105).

2. A method according to claim 1, **characterized in that** an initial addressing message (110) is converted into a Session Initiation Protocol message (112) by a media gateway control function (44).

3. A method according to any one of claims 1 or 2, **characterized in that** in a divided architecture of a circuit-switched domain (24) with a separation of a control layer from a transport layer a gateway mobile switching center server in the control layer and a media gateway in the transport layer are used instead of the gateway mobile switching center.

4. A method according to any one of claims 1 to 3, **characterized in that** the subscriber profile home server (48) stores subscriber settings on the basis of a Basic Service.

5. A method according to any one of claims 1 to 4, **characterized in that** the mobile radio network (10) transfers a Session Initiation Protocol - Uniform Resource Identifier (105) within the circuit-switched domain (24) to enable a transfer to a packet-switched Internet Protocol Multimedia Subsystem domain (40).

6. A method according to any one of claims 1 to 5, **characterized in that** the gateway mobile switching center (28) forwards the call to the media gateway control function system (44) of the Internet Protocol Multimedia Subsystem domain (40).

7. A gateway switching center (28) for a mobile radio network (10) for forwarding a call from a circuit-switched domain (24) to a packet-switched Internet Protocol Multimedia Subsystem domain (40) having the following features:
a) means (60) for detecting an incoming call on the basis of the initial addressing message (100) of a public network (30) or a mobile network (30),
b) control means (62) for verifying the subscriber profile home server (48) of the called subscriber,
c) request means (64) for requesting information for the forwarding of the called subscriber from the subscriber profile home server (48),
d) receiving device (66) for receiving a Session Initiation Protocol - Uniform Resource Identifier (105) from the subscriber profile home server (48) as a redirection parameter,
e) means (68) for determining whether a Session Initiation Protocol - Uniform Resource Identifier (105) is present as a redirection parameter,
f) device (70) for forwarding the call to the packet-switched Internet Protocol Multimedia Subsystem domain (40),
**characterized in that**
g) the receiving device (66) is adapted for receiving the Session Initiation Protocol - Uniform Resource Identifier (105) with an extended MAP signaling protocol which is extended for transmitting the Session Initiation Protocol - Uniform Resource Identifier (105).

8. A subscriber profile home server (48) for a mobile radio network (10) having a gateway mobile switching center (28) for forwarding a call from a circuit-switched domain (24) to a packet-switched Internet Protocol Multimedia Subsystem domain (40) having the following features:
a) means (50) for checking the assignment of a called subscriber,
b) response means (52) for transmitting information for the forwarding of the called subscriber at request to the gateway mobile switching center (28),
c) a transmitting device (56) for transmitting a Session Initiation Protocol - Uniform Resource Identifier (105) as a redirection parameter to the gateway mobile switching center (28),
**characterized in that**
d) the transmitting device (56) is adapted for transmitting the Session Initiation Protocol - Uniform Resource Identifier (105) with an extended MAP signaling protocol which is extended for transmitting the Session Initiation Protocol - Uniform Resource Identifier (105).

## Revendications

1. Procédé pour un réseau de radiotéléphonie mobile (10) destiné au transfert d'un appel d'un domaine à commutation de circuits (24) vers un domaine IMS (Internet Protocol Multimedia Subsystem) à commutation de paquets (40), comportant les étapes de procédé suivantes :
(a) saisie d'un appel entrant par un central de commutation mobile passerelle (28) à l'aide d'un message d'adressage initial (100) en vérifiant quel est le serveur local de profil d'utilisateur (48) pour l'utilisateur appelé,
(b) demande d'informations pour le transfert de l'utilisateur appelé par le central de commutation mobile passerelle (28) dans le serveur local de profil d'utilisateur,
(c) envoi d'un identifiant de ressource uniforme de protocole d'initiation de session (105) du serveur local de profil d'utilisateur (48) au central de commutation mobile passerelle (28) sous forme de paramètre de redirection,
(d) mise en évidence par le central de commutation mobile passerelle (28) de la présence d'un identifiant de ressource uniforme de protocole d'initiation de session (105) sous forme de paramètre de redirection,
(e) transfert de l'appel au domaine IMS à commutation de paquets (40),
**caractérisé en ce que**
(f) l'envoi de l'identifiant de ressource uniforme de protocole d'initiation de session (105) du serveur local de profil d'utilisateur (48) au central de commutation mobile passerelle (28) s'effectue avec un protocole de signalisation MAP élargi pour envoyer l'identifiant de ressource uniforme de protocole d'initiation de session (105).

2. Procédé selon la revendication 1, **caractérisé en ce qu'**un message d'adressage initial (110) est converti en message de protocole d'initiation de session (112) par une fonction de contrôle de passerelle multimédia (44).

3. Procédé selon l'une quelconque des revendications 1 ou 2, **caractérisé en ce qu'**en cas d'architecture divisée d'un domaine à commutation de circuits (24) avec séparation d'une couche de commande d'une couche de transport, un serveur de central de commutation mobile passerelle peut être utilisé, au lieu du central de commutation mobile passerelle, dans la couche de commande, et une passerelle multimédia peut être utilisée dans la couche de transport.

4. Procédé selon l'une quelconque des revendications 1 à 3, **caractérisé en ce que** le serveur local de profil d'utilisateur (48) mémorise des paramètres d'utilisateur en s'appuyant sur des services de base.

5. Procédé selon l'une quelconque des revendications 1 à 4, **caractérisé en ce que** le réseau de radiotéléphonie mobile (10) transfert un identifiant de ressource uniforme de protocole d'initiation de session (105) à l'intérieur du domaine à commutation de circuits (24) afin de permettre un transfert vers un domaine IMS à commutation de paquets (40).

6. Procédé selon l'une quelconque des revendications 1 à 5, **caractérisé en ce que** le central de commutation mobile passerelle (28) transfert l'appel au système de fonction de contrôle de passerelle multimédia (44) du domaine IMS (40).

7. Central de commutation passerelle (28) pour un réseau de radiotéléphonie mobile (10) destiné au transfert d'un appel d'un domaine à commutation de circuits (24) vers un domaine IMS à commutation de paquets (40), présentant les caractéristiques suivantes :
(a) moyens (60) pour la saisie d'un appel entrant à l'aide du message d'adressage initial (100) d'un réseau public (30) ou d'un réseau mobile (30),
(b) moyens de contrôle (62) pour la vérification du serveur local de profil d'utilisateur (48) de l'utilisateur appelé,
(c) moyens de demande (64) pour la demande d'informations pour le transfert de l'utilisateur appelé dans le serveur local de profil d'utilisateur (48),
(d) dispositif de réception (66) pour la réception d'un identifiant de ressource uniforme de protocole d'initiation de session (105) du serveur local de profil d'utilisateur (48) sous forme de paramètre de redirection,
(e) moyens (68) pour la mise en évidence de la présence d'un identifiant de ressource uniforme de protocole d'initiation de session (105) sous forme de paramètre de redirection,
(f) dispositif (70) de transfert de l'appel au domaine IMS à commutation de paquets (40),
**caractérisé en ce que**
(g) le dispositif de réception (66) pour la réception de l'identifiant de ressource uniforme de protocole d'initiation de session (105) est configuré avec un protocole de signalisation MAP élargi pour envoyer l'identifiant de ressource uniforme de protocole d'initiation de session (105).

8. Serveur local de profil d'utilisateur (48) pour un réseau de radiotéléphonie mobile (10) comportant un central de commutation mobile passerelle (28) pour le transfert d'un appel d'un domaine à commutation de circuits (24) vers un domaine IMS à commutation de paquets (40), présentant les caractéristiques suivantes :
(a) moyens (50) pour la vérification de l'affectation d'un utilisateur appelé,
(b) moyens (52) pour la transmission d'informations pour le transfert de l'utilisateur appelé sur demande adressée au central de commutation mobile passerelle (28),
(c) dispositif d'émission (56) pour l'envoi d'un protocole de signalisation MAP élargi pour envoyer l'identifiant de ressource uniforme de protocole d'initiation de session (105), sous forme de paramètre de redirection, au central de commutation mobile passerelle (28),
**caractérisé en ce que**
(d) le dispositif d'émission (56) pour l'envoi de l'identifiant de ressource uniforme de protocole d'initiation de session (105) est configuré avec un protocole de signalisation MAP élargi pour envoyer l'identifiant de ressource uniforme de protocole d'initiation de session (105).
